# EUROPEAN PATENT APPLICATION

(11) **EP 2 915 870 A1**
(43) Date of publication of application: **09.09.2015**
(21) Application number: 14157926.8
(22) Date of filing: 05.03.2014
(51) Int. Cl.: C10J 3/36, C10J 3/74, F23B 20/00, F23B 50/00, F23G 5/44

(54) **Pyro-gasification plant**

(30) Priority: 04.03.2014 IT MO20140053
(71) Applicant: Bio&Watt Gasification S.r.l., 20154 Milano (IT)
(72) Inventor: Fantacci, Marco, 20154 Milano (IT)
(74) Representative: Luppi, Emanuele

(57) **Abstract**

The pyrogasification plant (1) comprises a reaction chamber (2) having a base frame (3) supporting a lateral wall (4, 5, 6) wherein a material to be pyrogasified (M) can be introduced for being transformed into syngas (S), tar (T) and char (C), wherein the lateral wall (4, 5, 6) comprises an external supporting structure (4) supporting an internal metal cartridge (5), with a substantially tubular shape and having an upper extremity (5a) and a lower extremity (5b), both of which are open, the material to be pyrogasified (M) crossing the internal metal cartridge (5) from the upper extremity (5a) to the lower extremity (5b) remaining contained by the internal lateral surface of the internal metal cartridge (5).

## Description

The present invention relates to a pyrogasification plant.

As is known, the pyrogasification, or more simply gasification, of biomass consists in the thermochemical conversion of biomass into a combustible gas, implemented by means of the presence of a gasifying agent (normally air) through two successive thermochemical reactions: pyrolysis and gasification. The thermal degradation process occurs at high temperatures (above 700-800 °C), in the presence of a substoichiometric percentage of air which acts as oxidizing agent.

During the pyrogasification of biomass, the long chain chemical bonds are split into simpler molecules thanks to the contribution of heat and to the lack of oxygen.

The generic solid biomass molecule is thus transformed into gaseous, liquid and solid co-products.

The gaseous co-products consist of lighter and therefore non-condensable molecules and consequently prevalently consist of hydrogen, carbon monoxide, methane, carbon dioxide and nitrogen; the resulting gaseous mix makes up what is called synthesis gas or syngas and is itself a fuel, usually used to produce electricity.

The liquid co-products consist of vapours released by the sudden depolymerisation and fragmentation of the cellulose and hemicellulose components in the biomass; all these various complex hydrocarbon substances, which still have a high heat of combustion, are together generally called tar or pyrolysis oil.

The solid co-products on the other hand, charcoal or char non reacting during the pyrogasification process, mainly consist of carbon and of the ash originally present in the biomass.

The quantities relating to the three co-products depend on numerous factors, including the Heating Rate (the biomass heating speed), the Equivalence Ratio (quantity of combustive agent used in the process), and the process temperature, etc.

The pyrogasification process takes place inside special plants which do however have a number of drawbacks.

In this respect, it is underlined that in traditional plants, the thermochemical transformation of the biomass occurs inside a reaction chamber which, to withstand the high process temperatures, is made of refractory material.

The refractory material is however subject to extremely high wear, being in contact with the biomass in transformation.

Frequent maintenance and rebuilding jobs of the refractory structure are therefore necessary, at a considerable cost both in terms of labour and of plant down times, as well as for the purchase of new materials to replace the worn ones.

To this must be added that in traditional plants the liquid co-products (tar) and solid co-products (char) usually represent the upshot of gasification process waste which the plant operator is unable to dispose of and/or use.

The main aim of the present invention is to provide a pyrogasification plant which requires less frequent and expensive maintenance jobs than traditional plants.

A further object of the present invention is to provide a pyrogasification plant wherein operating parameters are improved to favour the production of syngas. Not the last object of the present invention consists in providing a pyrogasification plant with high process efficiency, able to transform and make available in the pyrogasification products over 90% of the energy content of the biomass.

Another object of the present invention is to provide a pyrogasification plant which can overcome the above mentioned drawbacks of the prior art in the ambit of a simple, rational, easy, effective to use and economic solution.

The above mentioned objects are achieved by the present pyrogasification plant according to claim 1.

Other characteristics and advantages of the present invention will become more evident from the description of a preferred, but not exclusive, embodiment of a pyrogasification plant, illustrated by way of an indicative, yet not limitative example, in the accompanying drawings in which:

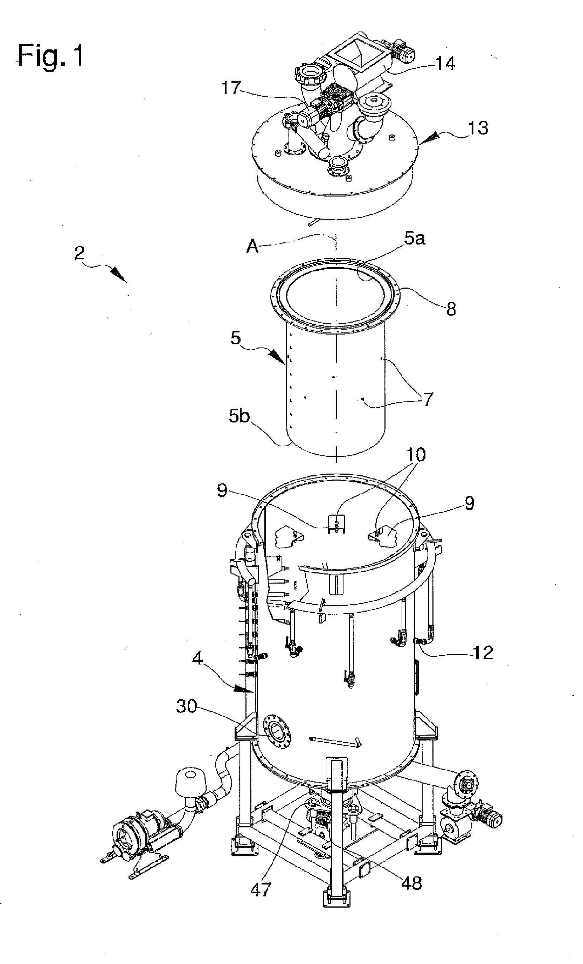

figure 1 is an exploded view of the reaction chamber of the plant according to the invention;

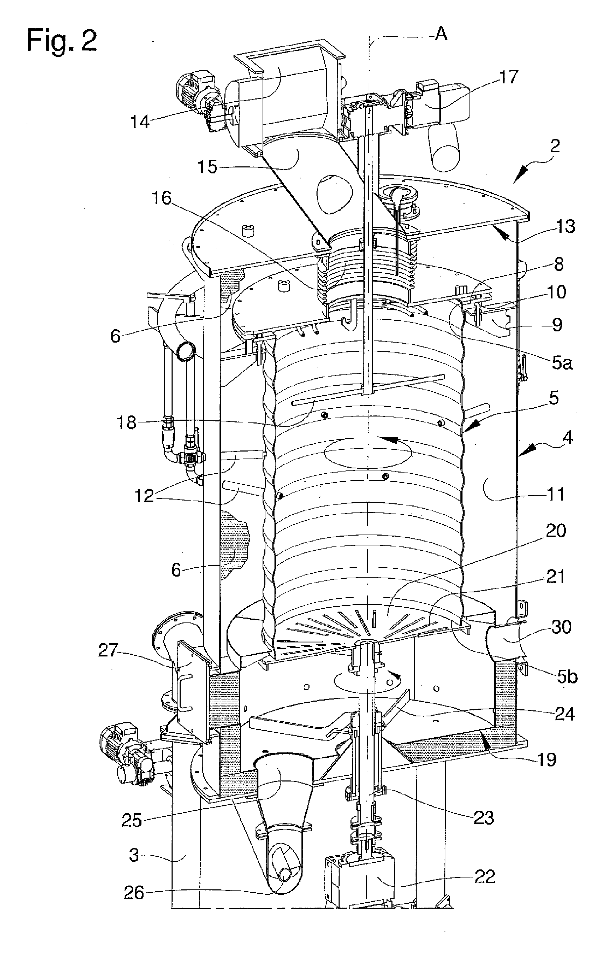

figure 2 is an axonometric and partially sectioned view of the reaction chamber of the plant according to the invention;

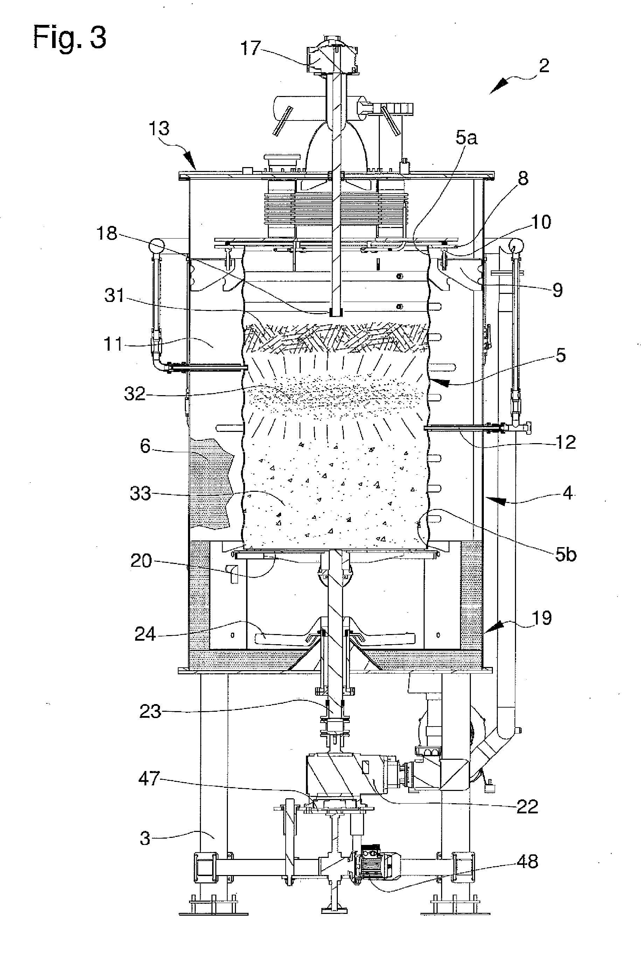

figure 3 is a sectioned view of the reaction chamber of the plant according to the invention;
figure 4 is a schematic view which shows the flow chart of the plant according to the invention.

With particular reference to these figures, globally indicated with reference numeral 1 is a pyrogasification plant.

The plant 1 is designed to treat a material to be pyrogasified M, preferably biomass.

The core of the plant 1 consists in at least a reaction chamber 2 wherein the material to be pyrogasified M is transformed into syngas S, tar T and char C. The reaction chamber 2 has a base frame 3 supporting a lateral wall 4, 5, 6 wherein the material to be pyrogasified M can be introduced.

The base frame 3 bears the lateral wall 4, 5, 6 in raised position with respect to the ground.

The lateral wall 4, 5, 6 comprises an external supporting structure 4 supporting an internal metal cartridge 5, with a substantially tubular shape and having an upper extremity 5a and a lower extremity 5b, both of which are open.

The material to be pyrogasified M crosses the internal metal cartridge 5 entering the upper extremity 5a towards the lower extremity 5b and remaining contained by the internal lateral surface of the internal metal cartridge 5.

The internal metal cartridge 5, therefore, defines to all effects the containment surface of the material to be pyrogasified M during the thermochemical transformation process and is made from a material specially designed to resist high temperatures on the one hand and wear on the other.

The internal metal cartridge 5 is made of a Nickel, Chrome, Iron, Carbon, Aluminium and Titanium alloy.

It is nevertheless underlined that, quite apart from the excellent performance of this material, the main advantage obtained from the plant 1 equipped with the internal metal cartridge 5 compared to traditional plants consists in the fact that the internal metal cartridge 5, when worn, can be removed and replaced with a new one.

In this respect, it is underlined that, within the scope of the present treatise, the word "cartridge" shall be deemed to mean a component of the removable and replaceable type, when used and/or worn.

The internal metal cartridge 5 is substantially shaped like a right cylinder with a circular section and a substantially vertical central axis A.

In this respect, it must be specified that, within the scope of the present treatise, to say that the internal metal cartridge 5 is substantially shaped like a right cylinder does not mean that it has a cylindrical shape in a strictly geometric sense (i.e., a lateral surface defined by a band of straight lines parallel with the central axis A), but rather that it has a conformation which, altogether, is similar to that of a right cylinder.

It is in fact underlined that in the embodiment shown in the illustrations, the lateral surface of the right cylinder defined by the internal metal cartridge 5 is corrugated.

In other words, the lateral surface of the internal metal cartridge 5 is undulated and has a series of convexities and narrow parts alternating in the direction of the central axis A.

This particular conformation considerably increases the structural resistance of the internal metal cartridge 5 against the mechanical and thermal stresses at work during the pyrogasification process.

The upper extremity 5a comprises a horizontal flange 8 which extends in a radial direction from the external lateral surface of the internal metal cartridge 5.

The external supporting structure 4 comprises at least a resting element 9, 10 on which rests the upper extremity 5a; in particular, the horizontal flange 8 of the internal metal cartridge 5 is suitable for resting on a plurality of resting elements 9, 10.

This way, the internal metal cartridge 5 is substantially hung from the resting elements 9, 10.

In this respect, it is specified that in the present treatise, to say that the internal metal cartridge 5 is hung means that it is supported by the resting elements 9, 10 so as to discharge its weight on the external supporting structure 4 mainly in correspondence of the upper extremity 5a, the rest of the internal metal cartridge 5 remaining substantially under traction due to the effect of the weight force.

Usefully, in the particular embodiment shown in the illustrations, the external supporting structure 4 is defined by at least a metal shell with a substantially tubular shape, the resting elements 9, 10 being obtained protruding towards the inside of the metal shell 4.

The resting elements 9, 10, in particular, consist of a series of brackets 9 bearing a foot 10 of very small size (between 1 and 5 cm).

This way, the metal/metal contact surfaces which can determine heat transmission by heat conduction are reduced to negligible values.

The metal shell 4 is shaped like a right cylinder with a circular section and an axis coaxial with the central axis A.

The cross dimensions of the metal shell 4 are greater than those of the internal metal cartridge 5 and between one and the other an interspace 11 is defined; in other words, the metal shell 4 has a larger diameter than the internal metal cartridge 5 and surrounds this completely despite being distanced from it.

The lateral wall 4, 5, 6 comprises at least a layer of insulating material 6 arranged outside the internal metal cartridge 5.

In particular, the layer of insulating material 6 is housed in the interspace 11.

Usefully, the insulating material 6 is ceramic fibre and permits obtaining a thermal break between the outside and the inside of the lateral wall 4, 5, 6 which jumps from about 80°C in correspondence of the metal shell 4 right up to even 1000°C in correspondence of the internal metal cartridge 5.

The lateral wall 4, 5, 6 is crossed transversally to the central axis A by a series of nozzles 12 which terminate in correspondence of the respective lateral holes 7 obtained in the internal metal cartridge 5.

The nozzles 12 are fed with a gasifying agent (air, air enriched with oxygen, air enriched with water vapour) to favour the gasification process of the material to be pyrogasified M inside the internal metal cartridge 5.

Above the lateral wall 4, 5, 6 the reaction chamber 2 comprises a closing and supply cap 13, which closes the lateral wall 4, 5, 6 horizontally and, at the same time, defines an access route 14, 15, 16 to the upper extremity 5a of the internal metal cartridge 5 for loading the reaction chamber 2 with the material to be pyrogasified M.

The access route 14, 15, 16 comprises a loading hopper 14, arranged in upper position, an oblique pipe 15, which drops from the loading hopper 14, and a vertical pipe 16, which drops from the oblique pipe 15 until it is in correspondence of the upper extremity 5a.

The vertical pipe 16 is substantially made like a bellows so as to adapt to the heat expansion caused by temperature fluctuations.

To distribute the material to be pyrogasified M in a uniform way inside the internal metal cartridge 5, a spreading system 17, 18 is provided.

The spreading system 17, 18 consists, e.g., of a small motor 17 for driving the rotation of a blade 18 around a vertical axis, preferably coaxial with the vertical pipe 16 and coinciding with the central axis A.

Below the lateral wall 4, 5, 6, instead, the reaction chamber 2 is shaped to define a collection chamber 19.

In this respect, it is underlined that the reaction chamber 2 has at least a grid element 20 arranged in correspondence of the lower extremity 5b for the gravity outflow of the char C from the internal metal cartridge 5 and its collection in the collection chamber 19 underneath.

The grid element 20 consists, e.g., of a substantially horizontal plate of circular shape, with a vertical symmetry axis substantially coaxial with the central axis A, and is equipped with substantially radial openings 21.

The grid element 20 is located in the proximity of the lower extremity 5b, though remaining separate from the internal metal cartridge 5, i.e., not in contact with this.

When the internal metal cartridge 5 rests on the resting elements 9, 10, therefore, the lower extremity 5b remains slightly raised with respect to the grid element 20.

Such solution allows the internal metal cartridge 5 to freely dilate along the central axis A due to the temperature fluctuations, without being subject to troublesome deformation or crushing and without damaging the grid element 20.

The grid element 20 is associated with movement means 22, 23 which cause it to rotate around a substantially vertical rotation axis, preferably coinciding with the symmetry axis of the grid element 20 and coaxial with the central axis A. The movement means 22, 23 consist in a small motor 22 arranged below the collection chamber 19, which causes the rotation of a vertical shaft 23 supporting the grid element 20.

As will be better described later on, during the pyrogasification process, the char C obtained from the pyrogasification process accumulates above the grid element 20 and the putting into rotation of the grid element 20 ensures the easier crossing of the openings 21 by the char C, and prevents this agglomerating.

At the base of the collection chamber 19 a movement system 24 is provided for moving the char C collected below the grid element 20.

The movement system 24 which, e.g., consists of an impeller borne by the same vertical shaft 23 which bears the grid element 20, moves the char C towards an outlet mouth 25 obtained in the base of the collection chamber 19.

The outlet mouth 25 communicates with a worm screw 26 which carries the char C towards other stations of the plant 1 to perform other process phases. Thanks to the impeller 24, the collection chamber 19 automatically expels the char C and tends to always remain fairly clean.

In some circumstances, however, it may be necessary to perform extraordinary cleaning operations and, for this purpose, the collection chamber 19 has an access door 27 obtained laterally, through which the char C can be ramrodded. To this must be added that, very advantageously, the grid element 20 can be lowered with respect to the position of use shown in the illustrations to permit, during cleaning, also accessing the lower part of the internal metal cartridge 5 and the upper surface of the grid element 20 and removing any char C residues from the openings 21.

The vertical movement of the grid element 20 occurs thanks to a lifting/lowering unit 47, 48 fitted under the collection chamber 19.

The lifting/lowering unit 47, 48 consists, e.g., of a supporting base 47, which bears the small motor 22 and the vertical shaft 23, and of a jack device 48, which permits raising and lowering the supporting base 47.

The plant 1 also comprises suction means 28 placed in fluid connection with the collection chamber 19.

Thanks to the suction means 28, the collection chamber 19 is in a vacuum with respect to the volume delimited by the internal metal cartridge 5 and, this way, the syngas S and the tar T are suctioned through the grid element 20 into the collection chamber 19 before flowing out from the reaction chamber 2 through a lateral outlet 30 obtained in the collection chamber 19.

In this respect, it is underlined that from the thermochemical transformation occurring inside the internal metal cartridge 5 tar T is obtained in the form of vapour which flows out through the lateral outlet 30 together with the syngas S. In particular, in conditions of normal operation of the reaction chamber 2 the following occurs:
- the upper part 31 of the internal metal cartridge 5 maintains a temperature between 200°C and 600°C and hosts the thermochemical pyrolysis reactions, wherein the volatile components (cellulose, hemicellulose) of the material to be pyrogasified M introduced from above evaporate and generate the tar T, rich in hydrocarbons. The remaining non-volatile components (lignin) remain in solid state forming carbon;
- the intermediate part 32 of the internal metal cartridge 5 maintains a temperature between 800°C and 1000°C and hosts the combustion reactions in the presence of substoichiometric air. In this phase, part of the material to be pyrogasified M is oxidized, generating the heat required to perform the gasification reactions, if necessary also thanks to the operation of the nozzles 12. The tar T, by effect of the vacuum inside the collection chamber 19 generated by the suction means 28, crosses the high-temperature combustion area where it undergoes thermal cracking: the hydrocarbons are thus broken down into elementary gas molecules;
- in the lower part 33 of the internal metal cartridge 5 the temperature drops to 600-700°C and the carbon is consumed in the gasification reactions fuelled by the combustion heat and molecular hydrogen (H2), carbon monoxide (CO) and methane (CH4) are produced, which make up the syngas S.

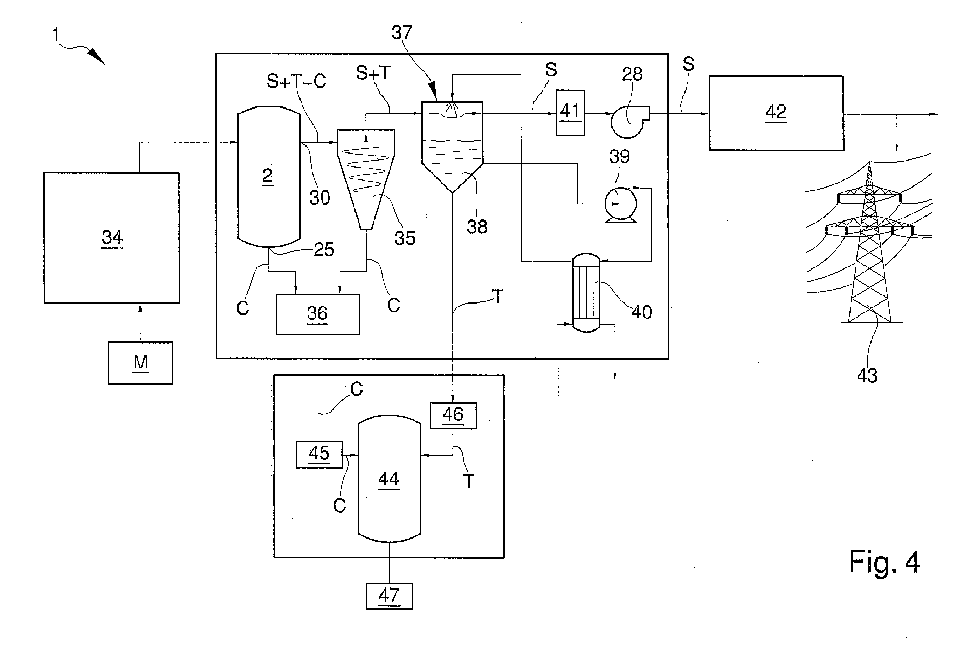

The reaction chamber 2 according to the invention is fitted in a plant 1 having one or more of the following additional stations shown in the flow chart in figure 4.

The material to be pyrogasified M enters the plant 1 and, optionally, before reaching the reaction chamber 2, can be made to pass through a dryer 34. Drying is required if the humidity of the material to be pyrogasified M is above 10%.

Various drying technologies can be used (ventilated storages, belt dryers, rotary dryers) with choice made on the basis of the environmental conditions and customer requirements (space availability, thermal energy exploitation, etc.).

In the dryer 34, the material to be pyrogasified M is heated and the humidity contained in it drops by effect of evaporation.

The material to be pyrogasified M can be usefully dried using the heat cogenerated by the plant 1, until it is suitable for fuelling the subsequent pyrogasification phase.

On exiting from the dryer 34, in fact, the material to be pyrogasified M reaches the closing and supply cap 13 and enters the reaction chamber 2 where the previously described reactions occur.

The gas mix, (syngas S, tar T and any char C residues still in suspension) extracted from the reaction chamber 2 through the lateral outlet 30, has to undergo dust extraction, cooling and filtering before being used to produce energy.

For this purpose, the plant 1 has the following apparatus:
- a cyclone 35 arranged downstream of the lateral outlet 30, wherein the gas mix is cleaned a first time of any char C residues present in the flow. Through the cyclone 35 the centrifugal force of the gas mix is exploited while this is made to swirl to separate any char C residues which, by gravity, are collected in a tank 36 together with the char C produced by the reaction chamber 2;
- a wet scrubber 37, arranged downstream of the cyclone 35, wherein the mix of gas exiting from the cyclone 35 is further cleaned and cooled by means of washing with water introduced in counter-flow into the gaseous flow. The gas mix enters the wet scrubber 37 at an operating temperature of around 600°C and exits at around 40°C deprived of the tar T component in the mix itself. The water introduced into the wet scrubber 37, on the other hand, enters at a rather low temperature, which permits condensing the tar T in the gas mix coming from the cyclone 35, and heats up. The hot water and the condensed tar T are collected up in a settling tank 38, where the tar T deposits on the bottom while the hot water is made to re-circulate by means of a pumping unit 39 and conveyed back into the wet scrubber 37, after passing through a heat exchanger 40 which cools it down;
- an electrostatic precipitator 41, arranged downstream of the wet scrubber 37, which electrically charges the gaseous flow exiting from the wet scrubber 37 to remove the residual solid components (char C) and condensable components (tar T) which has overcome the first two cleaning systems. The quantities of char C and tar T collected up thanks to the electrostatic precipitator 41 are usually negligible and, for this reason, do not appear on the flow chart in figure 4.

Still exiting from the electrostatic precipitator 41, therefore, is the syngas S with a very high cleaning value, which can be conveyed to a cogenerator 42 for the production of electricity to be introduced into the normal power grid 43 and in part self-consumed for operation of the plant 1.

The suction means 28, of the type of a compressor unit or a fan, can be arranged at any point of the line connecting the lateral outlet 30 of the reaction chamber 2, the cyclone 35, the wet scrubber 37, the electrostatic precipitator 41 and the cogenerator 42; in the particular embodiment shown in figure 4, e.g., the suction means 28 are arranged downstream of the electrostatic precipitator 41 and upstream of the cogenerator 42.

The char C collected in the tank 36 and the tar T collected in the settling tank 38 can be thermally exploited by means of a supplementary combustor 44, i.e., a secondary reactor purposely designed to burn the solid and liquid components produced at the same time as the syngas S inside the reaction chamber 2.

For this purpose, the char C coming from the tank 36 is first conveyed to a micronizing mill 45 before being introduced into the supplementary combustor 44.

The tar T, on the other hand, is extracted from the settling tank 38 and fed continuously into a heater 46, which brings it up to a temperature of around 120°C, before entering the supplementary combustor 44.

The heat produced by the supplementary combustor 44 is conveyed for thermal use (e.g., as heat source to dry the material to be pyrogasified M in the dryer 34) or generative use (e.g., to produce further electricity).

It is therefore easy to understand that the plant 1 has a very high process efficiency.

It is in fact underlined that the plant 1 exploits over 90% of the energy content of the material to be pyrogasified M, not only that coming from the syngas S but also that remaining in the tar T and in the char C, and that the only byproduct remaining at the end of the process consists of ash 47, i.e., in that part of the mass in the material to be pyrogasified M which cannot be exploited to produce energy.

The ash 47 is collected up as it comes out of the supplementary combustor 44.

## Claims

1. Pyrogasification plant (1), comprising at least a reaction chamber (2) having a base frame (3) supporting a lateral wall (4, 5, 6) wherein a material to be pyrogasified (M) can be introduced for being transformed into syngas (S), tar (T) and char (C), **characterized in that** said lateral wall (4, 5, 6) comprises an external supporting structure (4) supporting an internal metal cartridge (5), with a substantially tubular shape and having an upper extremity (5a) and a lower extremity (5b), both of which are open, said material to be pyrogasified (M) crossing said internal metal cartridge (5) from said upper extremity (5a) to said lower extremity (5b) remaining contained by the internal lateral surface of said internal metal cartridge (5).

2. Plant (1) according to claim 1, **characterized in that** said internal metal cartridge (5) is substantially shaped like a right cylinder with a circular section and a substantially vertical central axis (A).

3. Plant (1) according to claim 2, **characterized in that** said right cylinder has a corrugated lateral surface.

4. Plant (1) according to one or more of the preceding claims, **characterized in that** said external supporting structure (4) comprises at least a resting element (9, 10) on which rests said upper extremity (5a), said internal metal cartridge (5) being substantially hung from said resting element (9, 10).

5. Plant (1) according to claim 4, **characterized in that** said upper extremity (5a) comprises a horizontal flange (8) which extends in a radial direction from the external lateral surface of said internal metal cartridge (5) and is suitable for resting on a plurality of said resting elements (9, 10).

6. Plant (1) according to claim 5, **characterized in that** said external supporting structure (4) comprises at least a metal shell with a substantially tubular shape, said resting elements (9, 10) being obtained protruding towards the inside of said metal shell (4).

7. Plant (1) according to one or more of the preceding claims, **characterized in that** said lateral wall (4, 5, 6) comprises at least a layer of insulating material (6) arranged outside said internal metal cartridge (5).

8. Plant (1) according to claims 6 and 7, **characterized in that** said layer of insulating material (6) is housed in an interspace (11) defined between said internal metal cartridge (5) and said metal shell (4).

9. Plant (1) according to one or more of the preceding claims, **characterized in that** said reaction chamber (2) has at least a grid element (20) arranged in correspondence of said lower extremity (5b) for the gravity outflow of said char (C) from said internal metal cartridge (5) and its collection in a collection chamber (19) underneath.

10. Plant (1) according to claim 9, **characterized in that** said grid element (20) is located in the proximity of said lower extremity (5b) and is separate from said internal metal cartridge (5).

11. Plant (1) according to claim 9 or 10, **characterized in that** it comprises movement means (22, 23) of said grid element (20) revolving around a substantially vertical rotation axis.

12. Plant (1) according to claim 11, **characterized in that** said grid element (20) is substantially circular with a symmetry axis coaxial with said central axis (A) and coinciding with said rotation axis.

13. Plant (1) according to one or more of claims from 9 to 12, **characterized in that** it comprises suction means (28) placed in fluid connection with said collection chamber (19), said syngas (S) and said tar (T) being suctioned through said grid element (20) into said collection chamber (19) for their outflow from said reaction chamber (2).
